# DEMANDE DE BREVET EUROPEEN

(11) **EP 0 953 296 A1**
(43) Date de publication de la demande: **03.11.1999**
(21) Numéro de dépôt: 98108011.2
(22) Date de dépôt: 02.05.1998
(51) Int. Cl.: A23L 2/04, A23L 2/70, A23L 2/42, A23L 1/212

(54) **Procédé pour l'obtention d'un jus de kiwis**

(71) Demandeur: SOCIETE DES PRODUITS NESTLE S.A., 1800 Vevey (CH)
(72) Inventeur: Gauthier-Jaques, Alexandre, 1006 Lausanne (CH); Bortlik, Karlheinz, 1073 Savigny (CH)
(74) Mandataire: Thomas, Alain

(57) **Abrégé**

La présente invention concerne un procédé pour l'obtention d'un jus de kiwi conservant sa coloration d'origine, comprenant les étapes consistant à :
a) peler des kiwis,
b) soumettre lesdits kiwis à une pression comprise entre 100 et 400 MPa pendant une durée d'au moins 10 secondes,
c) laisser reposer lesdits fruits pendant au moins 24 heures à une température de réfrigération et
d) broyer lesdits fruits en purée et clarifier ladite purée pour en faire un jus.

## Description

La présente invention concerne un procédé d'obtention de jus de kiwis.

La demande de brevet EP 485'193 concerne déjà un procédé d'obtention de purée de kiwis, dans lequel on édulcore la pulpe avec un agent sucrant de manière à éviter un brunissement de ladite purée de Kiwis. L'inconvénient de ce procédé est qu'il nécessite l'addition dans le fruit d'un additif exogène, ce qui peut dénaturer son côté naturel.

Le but de la présente invention est de mettre au point un procédé d'obtention de jus de kiwis, dans lequel il est inutile d'envisager une addition de produit extérieur et permettant quand même de conserver la coloration d'origine desdits kiwis. Le procédé selon l'invention est basé sur un traitement physique des kiwis.

L'invention concerne un procédé pour l'obtention d'un jus de kiwi conservant sa coloration d'origine, qui comprend les étapes consistant à :
a) peler des kiwis,
b) soumettre lesdits kiwis à une pression comprise entre 100 et 400 MPa (méga Pascal) pendant une durée d'au moins 10 secondes,
c) laisser reposer lesdits fruits pendant au moins 24 heures à une température de réfrigération et
d) broyer lesdits fruits en purée et clarifier ladite purée pour en faire un jus.

Il est connu que les kiwis contiennent un enzyme, la polyphénol oxydase (PPO), qui est responsable du brunissement du jus et de la purée de fruit. Le but de la présente invention est donc d'inactiver cet enzyme de manière à réduire totalement ou en grande partie le brunissement sus-mentionné. Cette inactivation est atteinte grâce à un traitement physique à haute pression.

Le type de kiwis utilisé n'est pas critique. Il est possible d'utiliser tout type de Kiwis, cultivés dans le monde. Il est bien entendu préférable que ces kiwis aient atteints un degré de mûrissement qui leur donne les qualités requises pour en faire un jus. Ces fruits sont normalement pelés, car il faut éliminer la pelure et les poils desdits kiwis.

L'appareil utilisé pour mettre les fruits sous pression est connu dans l'état de la technique. On prend de préférence une presse isostatique à froid ou toute autre machine permettant la mise sous pression.

Le broyage des fruits est effectué avec une machine connue dans l'état de la technique. Ce broyage n'est pas du tout critique et toute machine ayant une fonctionnalité de broyage peut être utilisée.

La clarification de la purée de kiwis est normalement effectuée par centrifugation, par filtration ou par tout autre procédé connu dans le domaine de la technique.

Le jus de fruit traité selon l'invention est alors prêt pour être emballée, par exemple dans une brique en carton ou tout autre conteneur. Avant d'arriver au remplissage, il faut pasteuriser le jus de kiwis à une température comprise entre 70 et 80 °C et on effectue alors le remplissage sur une ligne hautement hygiénique ou une ligne aseptique.

On a constaté que selon l'invention, les kiwis doivent être traités sous pression, soit sous la forme entière, soit sous la forme coupée en tranches. En tout cas, le traitement effectué sur de le jus de kiwis ne conduit pas au résultat escompté, à savoir le non-brunissement dudit jus.

Le traitement sous pression doit être effectué à une pression d'au moins 100 MPa, et de préférence à une pression comprise entre 200 et 400 MPa. Ce qui signifie que l'on se situe dans un domaine de pression parfaitement accessible de manière peu onéreuse, avec des équipements très largement disponibles. La durée du traitement sous pression est normalement compris entre 10 secondes et une minute. Normalement, il est connu que pour désactiver la PPO, il faut des pressions plutôt de l'ordre de 800 à 900 MPa.

Il est important selon l'invention de laisser reposer les kiwis traités avant le broyage, car dans le cas contraire, le résultat n'est pas atteint. Cette durée de repos des kiwis est compris entre 24 et 48 heures à une température de réfrigération. Par température de réfrigération, on entend dans la présente description, une température comprise entre 0 et 14°C de préférence une température comprise entre 4 et 12 °C.

Il est également important selon l'invention de suivre l'activité de la polyphénol oxydase. Celle-ci est analysée à 480 nm selon la méthode de Leuba (1977) avec un tampon phosphate à pH 6,0 avec de la L-DOPA qui est la 3-(3,4-dihydroxyphényl)-L-alanine de la Société Fluka, comme substrat. Le taux d'absorption est mesuré avec un spectrophotomètre Uvikon 930 de la Société Kontron. Les mesures sont données en unité d'absorbance (u.a.) par micro gramme de protéine.

La suite de la description est faite en référence aux exemples.

### Exemple 1

On prépare des kiwis pelés , qu'on coupe en tranches et on les soumet au traitement sous pression. Ensuite, on broye les fruits et on sépare par filtration le jus de la pulpe. Cette séparation est effectuée pour pouvoir faire le mesure de la polyphénol oxydase (PPO). On fait des essais avec des pressions de 0, 100 et 380 MPa. Il est important selon l'invention de laisser reposer le fruit après le traitement sous pression. Des mesures d'activité de la PPO ont donc été faites, sans laisser reposer les fruits, en les laissant reposer une journée et en les laissant reposer deux jours.
Si on ne laisse pas reposer les fruits avant le broyage, quelle que soit alors la pression, 0, 100 ou 380 MPa, on arrive à des teneurs en PPO comprises entre 0,010 et 0,020 u.a. par micro gramme de protéine après un stockage du jus de kiwis de sept jours.
Par contre, si on laisse reposer les kiwis pendant une journée, pour un traitement à 380 Mpa, il n'y a plus aucune trace de PPO après un stockage de longue durée. Cependant, dans ce cas, sans traitement sous pression, on a une teneur en PPO au bout de 7 jours de 0,05 u.a.
Si on refait la même expérience avec des kiwis qu'on a laissé reposer pendant deux jours, avec un traitement à 380 MPa, il n'y a plus aucune trace de PPO lors du stockage de longue durée. Mais, si on ne fait aucun traitement sous pression, on arrive après 7 jours à une teneur en PPO de 0,04 u.a.

### Exemple 2

On refait les mêmes opérations que ci-dessus, mais au lieu de travailler avec des morceaux de kiwis en tranches, on fait un jus de ces fruits et on soumet le jus de kiwis au traitement sous pression.
On le soumet dans ce cas, à des pressions de 0, 400 et 600 MPa et on effectue les mesures d'activité de la PPO comme pour l'exemple précédent. Les mesures sont effectuées comme ci-dessus sur le jus de kiwis.
On effectue le traitement sous pression pendant 30 secondes. Sans traitement, on a une valeur de PPO de 0,3 u.a. après 7 jours de stockage du produit, avec un traitement à 400 MPa, on a une valeur de 0,2 u.a. et à 600 MPa, on a une valeur de 0,1 u.a.
On constate même que si on augmente la durée du traitement sous pression, l'activité de la PPO dépasse largement l'activité mesurée dans les jus non traités. Il faut donc bien selon l'invention, travailler sur le fruit entier ou coupé en tranches, mais pas sur le jus de fruits.

## Revendications

1. Procédé pour l'obtention d'un jus de kiwi conservant sa coloration d'origine, caractérisé en ce qu'il comprend les étapes consistant à :
a) peler des kiwis,
b) soumettre lesdits kiwis à une pression comprise entre 100 et 400 MPa pendant une durée d'au moins 10 secondes,
c) laisser reposer lesdits fruits pendant au moins 24 heures à une température de réfrigération et
d) broyer lesdits fruits en purée et clarifier ladite purée pour en faire un jus.

2. Procédé selon la revendication 1 , caractérisé en ce que les kiwis pelés sont coupés en tranches avant le traitement sous pression.

3. Procédé selon l'une des revendications 1 ou 2 , caractérisé en ce que les kiwis sont soumis à une pression comprise entre 200 et 400 MPa.

4. Procédé selon l'une des revendications 1 à 3, caractérisé en ce que la durée du traitement sous pression est comprise entre 10 secondes et une minute.

5. Procédé selon l'une des revendications 1 à 4, caractérisé en ce qu'on laisse reposer les kiwis pendant 24 à 48 heures à une température de réfrigération comprise entre 4 et 12 °C.

6. Procédé selon l'une des revendications 1 à 5, caractérisé en ce que la clarification de la purée de kiwis est faite par centrifugation ou filtration.

7. Procédé selon l'une des revendications 1 à 6, caractérisé en ce le jus de kiwis est pasteurisé à une température comprise entre 70 et 80 °C et on effectue un remplissage sur une ligne hautement hygiénique ou une ligne aseptique.
